# EUROPÄISCHE PATENTANMELDUNG

(11) **EP 4 183 717 A1**
(43) Veröffentlichungstag der Anmeldung: **24.05.2023**
(21) Anmeldenummer: 22206744.9
(22) Anmeldetag: 10.11.2022
(51) Int. Cl.: B65G 1/04

(54) **LASTAUFNAHMEVORRICHTUNG ZUR ÜBERGABE EINER LAGEREINHEIT ZWISCHEN EINER REGALBEDIENEINHEIT UND EINEM LAGERREGAL UND VERFAHREN**

(30) Priorität: 11.11.2021 DE 102021129337
(71) Anmelder: Fraunhofer-Gesellschaft zur Förderung der angewandten Forschung e.V., 80686 München (DE)
(72) Erfinder: Schroer, Winfried, 44227 Dortmund (DE)
(74) Vertreter: Heeschen Pültz Patentanwälte PartGmbB

(57) **Zusammenfassung**

Die Erfindung betrifft eine Lastaufnahmevorrichtung (1, 100, 200, 200') zur Übergabe einer Lagereinheit zwischen einer Regalbedieneinheit (300), mit der die Lagereinheit in einer Transportposition (T) transportierbar ist, und einem Lagerregal, in dem die Lagereinheit in einer Lagerposition (L) lagerbar ist, umfassend eine erste Bewegungseinheit (4, 104, 204), die angeordnet und ausgebildet ist, um die Lagereinheit aus einer Übergabeposition (U) in die Lagerposition (L) und aus der Lagerposition (L) in die Übergabeposition (U) zu bewegen, und eine zweite Bewegungseinheit (6, 106, 206), die angeordnet und ausgebildet ist, um die Lagereinheit von der Übergabeposition (U) in die Transportposition (T) und von der Transportposition (T) in die Übergabeposition (U) zu bewegen, wobei die erste Bewegungseinheit (4, 104, 204) weiter angeordnet und ausgebildet ist, um die Lagereinheit an einer Anhebeseite (26) anzuheben.

## Beschreibung

Die Erfindung betrifft eine Lastaufnahmevorrichtung zur Übergabe einer Lagereinheit zwischen einer Regalbedieneinheit und einem Lagerregal, eine Regalbedieneinheit zum Bedienen eines Lagerregals, ein Regalsystem, ein Verfahren zur Übergabe einer Lagereinheit von einem Lagerregal zu einer Regalbedieneinheit sowie ein Verfahren zur Übergabe einer Lagereinheit von einer Regalbedieneinheit zu einem Lagerregal.

Lastaufnahmevorrichtungen sind grundsätzlich bekannt. Lastaufnahmevorrichtungen werden auch als Lastaufnahmemittel (LAM) bezeichnet. Grundsätzlich kann zwischen aktiven und passiven Lastaufnahmevorrichtungen unterschieden werden, wobei ein aktives Lastaufnahmemittel einen eigenen Antrieb aufweist und somit eine Last selbstständig und gegebenenfalls automatisch aufnehmen und/oder abgeben kann.

Bei Lastaufnahmevorrichtungen für Behälter ist entweder unterhalb oder seitlich des Behälters, anwendungsbezogen gegebenenfalls auch oberhalb des Behälters, ein Freiraum im Lagerfach des Lagerregals für den einfahrenden Teil der Lastaufnahmevorrichtung vorzusehen. Dieser Freiraum verringert den Volumen-Nutzungsgrad des Lagers.

Die DE29800855U1, WO2003070607A1, DE3247158A1 und US4690602A offenbaren Vorrichtungen und Verfahren zum Beschicken und Entnehmen von Behältern in ein bzw. aus einem Regal.

Darüber hinaus ist es ein Ziel bei der Entwicklung eines Lagers, die Durchsatzleistung zu maximieren. Die Durchsatzleistung des Lagers kann unter anderem durch eine Reduktion der Spielzeit der Lastaufnahmevorrichtung bei der Übergabe der Lagereinheit zwischen der Regalbedieneinheit und dem Lagerregal verringert werden. Die existierenden Lösungen bieten verschiedene Vorteile, jedoch sind weitere Verbesserungen wünschenswert.

Es ist daher eine Aufgabe der vorliegenden Erfindung, eine Lastaufnahmevorrichtung zur Übergabe einer Lagereinheit zwischen einer Regalbedieneinheit und einem Lagerregal, eine Regalbedieneinheit zum Bedienen eines Lagerregals, ein Regalsystem, ein Verfahren zur Übergabe einer Lagereinheit von einem Lagerregal zu einer Regalbedieneinheit sowie ein Verfahren zur Übergabe einer Lagereinheit von einer Regalbedieneinheit zu einem Lagerregal bereitzustellen, die einen oder mehrere der genannten Nachteile vermindern oder beseitigen. Insbesondere ist es eine Aufgabe der Erfindung, eine Lösung bereitzustellen, die den Volumen-Nutzungsgrad eines Lagers verbessert. Ferner ist es eine Aufgabe der Erfindung, eine Lösung bereitzustellen, die die Durchsatzleistung eines Lagers erhöht.

Diese Aufgabe wird gelöst mit einer Lastaufnahmevorrichtung und den Verfahren nach den Merkmalen der unabhängigen Patentansprüche. Weitere vorteilhafte Ausgestaltungen dieser Aspekte sind in den jeweiligen nebengeordneten und abhängigen Patentansprüchen angegeben. Die in den Patentansprüchen und der Beschreibung einzeln aufgeführten Merkmale sind in beliebiger, technologisch sinnvoller Weise miteinander kombinierbar, wobei weitere Ausführungsvarianten der Erfindung aufgezeigt werden.

Gemäß einem ersten Aspekt wird die eingangs genannte Aufgabe gelöst durch eine Lastaufnahmevorrichtung zur Übergabe einer Lagereinheit zwischen einer Regalbedieneinheit, mit der die Lagereinheit in einer Transportposition transportierbar ist, und einem Lagerregal, in dem die Lagereinheit in einer Lagerposition lagerbar ist, umfassend eine erste Bewegungseinheit, die angeordnet und ausgebildet ist, um die Lagereinheit aus einer Übergabeposition in die Lagerposition und aus der Lagerposition in die Übergabeposition zu bewegen, und eine zweite Bewegungseinheit, die angeordnet und ausgebildet ist, um die Lagereinheit von der Übergabeposition in die Transportposition und von der Transportposition in die Übergabeposition zu bewegen, wobei die erste Bewegungseinheit weiter angeordnet und ausgebildet ist, um die Lagereinheit an einer Anhebeseite anzuheben.

Der Erfindung liegt die Erkenntnis zugrunde, dass der zusätzliche Freiraum im Lagerfach reduziert oder vermieden werden kann, wenn die Bewegungseinheit der Lastaufnahmevorrichtung zweiteilig ausgebildet ist und darüber hinaus insbesondere die dem Lagerregal abgewandte Anhebeseite der Lagereinheit anheben kann. Durch das Anheben wird die Reibung zwischen dem Lagerregal und der Lagereinheit bei der Bewegung der Lagereinheit innerhalb des Lagerregals reduziert. Somit kann die erste Bewegungseinheit die Lagereinheit in die Lagerposition bewegen beziehungsweise aus der Lagerposition in die Übergabeposition in vorteilhafter Weise bewegen.

Ein weiterer Vorteil der Lastaufnahmevorrichtung besteht darin, dass die erste Bewegungseinheit nicht um eine gesamte Länge der Lagereinheit in Richtung des Lagerregals ausgefahren werden muss. Somit reduziert sich die Spielzeit und die Durchsatzleistung des Lagers wird verbessert. Die erste Bewegungseinheit kann darüber hinaus kompakt ausgebildet werden und beispielsweise mit ohnehin vorhandenen Aussparungen an der Lagereinheit, wie sie beispielsweise bei 600 x 400er Behältern üblich sind, zusammenwirken. Infolgedessen erfordert die Lastaufnahmevorrichtung im Wesentlichen keinen zusätzlichen Freiraum innerhalb des Lagerregals.

Die Lastaufnahmevorrichtung ist zur Übergabe der Lagereinheit zwischen der Regalbedieneinheit und dem Lagerregal ausgebildet. Unter einer Übergabe ist insbesondere ein Bringen und/oder ein Holen der Lagereinheit zu verstehen. Die Lagereinheit kann beispielsweise ein Behälter oder eine Palette sein. Die Regalbedieneinheit kann beispielsweise ein in der DE 10 2013 006 391 A1 beschriebenes Bedienfahrzeug sein. Ferner kann die Regalbedieneinheit auch jegliche andere geeignete Ausbildung aufweisen.

Die nicht von der Lastaufnahmevorrichtung umfasste Regalbedieneinheit weist eine Transportposition für die Lagereinheit auf, innerhalb derer die Lagereinheit mit der Regalbedieneinheit transportiert wird. Die Transportposition kann beispielsweise auf der Regalbedieneinheit vorgesehen sein und ferner vorzugsweise mittig auf der Regalbedieneinheit. Das nicht von der Lastaufnahmevorrichtung umfasste Lagerregal kann eine Vielzahl an Lagerpositionen aufweisen, die beispielsweise durch Lagerfächer definiert sind.

Die Lastaufnahmevorrichtung umfasst die erste Bewegungseinheit. Die erste Bewegungseinheit ist angeordnet und ausgebildet, um die Lagereinheit aus der Übergabeposition in die Lagerposition zu bewegen. Die Übergabeposition ist als eine Position zu verstehen, die sich im bestimmungsgemäßen Betrieb der Lastaufnahmevorrichtung zwischen der Lagerposition und der Transportposition befindet, wenn sich die Regalbedieneinheit vor der zu bedienenden Lagerposition befindet. Die Bewegung der Lagereinheit von der Lagerposition zu der Transportposition findet somit zweistufig statt, nämlich zunächst von der Lagerposition in die Übergabeposition und von der Übergabeposition in die Transportposition. Ferner ist die erste Bewegungseinheit angeordnet und ausgebildet, um die Lagereinheit aus der Lagerposition in die Übergabeposition zu bewegen.

Die von der ersten Bewegungseinheit bewirkte Bewegung der Lagereinheit wird auch als eine erste Übergabebewegung bezeichnet. Die erste Übergabebewegung ist im Wesentlichen unabhängig von einer von der zweiten Bewegungseinheit bewirkten zweiten Übergabebewegung. Die erste Übergabebewegung kann in die zweite Übergabebewegung mit oder ohne einen Halt übergehen. Die erste Übergabebewegung und die zweite Übergabebewegung sind vorzugsweise im Wesentlichen parallel ausgerichtet. Um die Lagereinheit mittels der ersten Bewegungseinheit in vorteilhafter Weise zu bewegen, ist die erste Bewegungseinheit weiter angeordnet und ausgebildet, um die Lagereinheit an der Anhebeseite anzuheben. Unter einem Anheben der Lagereinheit mittels der ersten Bewegungseinheit ist insbesondere ein derartiges Anheben zu verstehen, dass die Reibung zwischen der Lagereinheit und dem Lagerregal verringert wird. Dieses Anheben ist insbesondere in vertikaler Richtung ausgerichtet oder weist zumindest eine vertikale Bewegungskomponente auf. Die Anhebeseite der Lagereinheit ist insbesondere die Seite der Lagereinheit, die im bestimmungsgemäßen Betrieb der Lastaufnahmevorrichtung dem Lagerregal abgewandt und/oder der Regalbedieneinheit zugewandt ist.

Die zweite Bewegungseinheit ist angeordnet und ausgebildet, um die Lagereinheit von der Übergabeposition in die Transportposition und von der Transportposition in die Übergabeposition zu bewegen. Die zweite Bewegungseinheit bewirkt die zweite Übergabebewegung auf die Lagereinheit. Während der zweiten Übergabebewegung ist ein Anheben der Lagereinheit mittels der ersten Bewegungseinheit vorzugsweise nicht erforderlich. Es ist bevorzugt, dass die zweite Bewegungseinheit und die erste Bewegungseinheit derart gesteuert werden, dass die zweite Übergabebewegung mit der ersten Übergabebewegung synchronisiert ist.

Im bestimmungsgemäßen Betrieb wird die Lagereinheit aus dem Lagerregal entnommen, indem zunächst die erste Bewegungseinheit auf die Lagereinheit wirkt. Hierfür fährt die erste Bewegungseinheit unter die Lagereinheit und hebt diese an. Durch das Anheben wird die Reibung zwischen der Lagereinheit und dem Lagerregal, beispielsweise Winkelauflagen im Lagerfach, reduziert bzw. aufgehoben und gleichzeitig die Oberseite der Oberschiene reibschlüssig an die Lagereinheit gekoppelt, sodass die Lagereinheit von der Oberschiene mitgenommen werden kann.

Nach dem Anheben fährt die erste Bewegungseinheit in Richtung der zweiten Bewegungseinheit und zieht somit die Lagereinheit aus der Lagerposition in die Übergabeposition. Ab der Übergabeposition wirkt die zweite Bewegungseinheit auf die Lagereinheit und zieht diese in die Transportposition.

Das Bringen der Lagereinheit erfolgt in umgekehrter Richtung. Hierbei wird die Lagereinheit zunächst von der zweiten Bewegungseinheit von der Transportposition in die Übergabeposition bewegt. Anschließend wird die Lagereinheit von der ersten Bewegungseinheit von der Übergabeposition in die Lagerposition bewegt und gleichzeitig angehoben, sodass die Lagereinheit in vorteilhafter Weise in das Lagerregal bewegt werden kann.

In einer bevorzugten Ausführungsvariante der Lastaufnahmevorrichtung ist vorgesehen, dass die erste Bewegungseinheit einen Hebemechanismus zum Anheben der Lagereinheit aufweist, wobei der Hebemechanismus derart angeordnet und ausgebildet ist, dass die angehobene Lagereinheit lediglich mit einem Bodenabschnitt, vorzugsweise mit einer Bodenkante, innerhalb des Lagerregals bei der ersten Übergabebewegung mit der ersten Bewegungseinheit aufliegt.

Der Bodenabschnitt kann beispielsweise weniger als 75 %, weniger als 50 % oder weniger als 25 % einer Bodenfläche der Lagereinheit sein. Ferner ist es bevorzugt, dass die erste Bewegungseinheit die Lagereinheit derart anheben kann, dass die Lagereinheit lediglich mit der Bodenkante in das Lagerregal hinein- oder aus diesem herausbewegt wird.

Eine weitere bevorzugte Ausführungsvariante der Lastaufnahmevorrichtung zeichnet sich dadurch aus, dass der Hebemechanismus eine Oberschiene und eine vertikal unter der Oberschiene angeordnete Unterschiene aufweist, die Oberschiene und die Unterschiene parallel zu einer Hauptbewegungsrichtung der Lagereinheit ausgerichtet sind und die Oberschiene und Unterschiene relativ zueinander derart bewegbar sind, dass eine Auflagerfläche der Oberschiene vertikal bewegbar ist, sodass die Anhebeseite der Lagereinheit mit der Oberschiene anhebbar ist.

Ein mit einer Oberschiene und einer Unterschiene ausgebildeter Hebemechanismus hat den Vorteil, dass dieser kompakt ausbildbar ist. Insbesondere können die Oberschiene und die Unterschiene derart ausgebildet sein, dass diese an an den Lagereinheiten vorgesehenen bodenseitigen Aussparungen wirken. Ferner sind die Oberschiene und die Unterschiene in kompakter Bauweise an der Lastaufnahmevorrichtung anordenbar, sodass auch die Lastaufnahmevorrichtung als solche kompakt ausbildbar ist.

Die Oberschiene und/oder die Unterschiene kann bzw. können beispielsweise aus Nylon, Polycaprolactam oder Polytetrafluorethylen, auch bekannt als Teflon, bestehen oder diese Materialien umfassen. Es ist insbesondere bevorzugt, dass eine der Oberschiene abgewandte Unterseite der Unterschiene ein gleitfähiges Material, beispielsweise Nylon oder Polycaprolactam, umfasst, damit die Unterschiene auf einem Auflagerabschnitt mit einem geringen Reibungswiderstand gleitet. Die Oberseite der Oberschiene sollte einen möglichst hohen Reibwert haben, damit mittels der Oberschiene eine Mitnahme der Lagereinheit in vorteilhafter Weise ermöglicht wird. Vorzugsweise ist die Oberseite der Oberschiene besandet ausgebildet. Eine besandete Oberseite kann beispielsweise durch eine Besandung der Oberfläche der Oberschiene realisiert werden.

Die Oberschiene und die Unterschiene sind vorzugsweise mit ihrer Haupterstreckungsrichtung parallel zu der Hauptbewegungsrichtung, die insbesondere parallel zur ersten Übergabebewegung ist, ausgerichtet. Die Hauptbewegungsrichtung ist insbesondere die Richtung, in der die Lagereinheit von der ersten Bewegungseinheit und/oder der zweiten Bewegungseinheit bewegt wird.

Dass die Auflagerfläche der Oberschiene durch die Relativbewegung der Oberschiene zu der Unterschiene vertikal bewegbar ist, kann durch unterschiedliche Ausführungsformen ermöglicht werden. Im Folgenden wird noch näher eine geometrische Lösung mittels einer Verzahnung, beispielsweise einer Sägeverzahnung, beschrieben. Darüber hinaus sind weitere technische Lösungen denkbar, beispielsweise mittels einer Pneumatik oder Hydraulik oder anderweitige mechanische Lösungen, wie beispielsweise einer im Folgenden näher erläuterten Kippschiene. Die Oberschiene ist insbesondere derart ausgebildet, um mit Aussparungen am Boden der Lagereinheit, beispielsweise einem 600 x 400er Behälter zusammenzuwirken.

Eine weitere bevorzugte Ausführungsform der Lastaufnahmevorrichtung zeichnet sich dadurch aus, dass die Unterschiene auf einer der Oberschiene zugewandten Oberseite und die Oberschiene auf einer der Unterschiene zugewandten Unterseite jeweils eine korrespondierende Geometrie, insbesondere eine Verzahnung, aufweisen, die derart angeordnet und ausgebildet sind, dass die Oberschiene durch eine relative Bewegung zu der Unterschiene, insbesondere in der Hauptbewegungsrichtung, anhebbar ist. Die Verzahnung kann beispielsweise keilförmig und/oder sägezahnförmig ausgebildet sein. Die Oberseite der Unterschiene und die Unterseite der Oberschiebe weisen vorzugsweise jeweils ein gleitfähiges Material auf, sodass die Relativbewegung der Oberschiene zu der Unterschiene mit einem geringen Reibungswiderstand möglich ist. Das gleitfähige Material kann beispielsweise Nylon oder Polycaprolactam sein.

In einer weiteren bevorzugten Ausführungsvariante der Lastaufnahmevorrichtung ist vorgesehen, dass die Oberschiene und die Unterschiene in einer Ruheposition von einem Federelement zusammengezogen und/oder in einer Hebeposition von einem Schienenantrieb auseinandergezogen sind, wobei die Oberschiene in der Hebeposition angehoben ist.

Durch das Federelement wird die Ruheposition der Oberschiene relativ zu der Unterschiene definiert. Beispielsweise können die Zähne der Oberschiene und der Unterschiene in der Ruheposition aneinander anliegen und somit eine stabile Position der Oberschiene und der Unterschiene ausbilden. Mittels des Schienenantriebs kann die Oberschiene relativ zu der Unterschiene bewegt werden, insbesondere in der Hauptbewegungsrichtung, sodass die Oberschiene und die Unterschiene auseinandergezogen sind und die Oberschiebe angehoben ist.

Durch das Wirken des Federelements entgegen der Richtung des Auseinanderziehens, kann die Position der Oberschiene zu der Unterschiene mittels des Schienenantriebs eindeutig definiert werden. Somit kann die Hebeposition gezielt eingestellt und infolgedessen das Anheben der Lagereinheit gezielt gesteuert werden.

Eine weitere bevorzugte Ausführungsvariante der Lastaufnahmevorrichtung zeichnet sich dadurch aus, dass der Schienenantrieb einen mit der Unterschiene gekoppelten, ersten Seilzug und einen mit der Oberschiene gekoppelten, zweiten Seilzug aufweist, der erste Seilzug angeordnet und ausgebildet ist, um die Unterschiene und die Oberschiene zu bewegen und der zweite Seilzug angeordnet und ausgebildet ist, um die Oberschiene relativ zu der Unterschiene zu bewegen.

Mittels des ersten Seilzugs werden insbesondere die Unterschiene und die Oberschiene gemeinsam bewegt. Die Bewegung der Unterschiene und der Oberschiene mittels des ersten Seilzugs wird insbesondere relativ zu einem Grundrahmen der Lastaufnahmevorrichtung bewirkt.

Eine weitere bevorzugte Ausführungsvariante der Lastaufnahmevorrichtung zeichnet sich dadurch aus, dass der erste Seilzug und der zweite Seilzug mittels einer einzelnen Antriebseinheit angetrieben werden. Beispielsweise können der erste Seilzug und der zweite Seilzug auf einer einzelnen Seilzugwinde angeordnet sein, die von der einzelnen Antriebseinheit angetrieben wird. Der erste Seilzug und der zweite Seilzug können miteinander gekoppelt sein. Darüber hinaus ist es bevorzugt, dass der erste Seilzug und der zweite Seilzug einteilig ausgebildet sind.

In einer weiteren bevorzugte Ausführungsvariante der Lastaufnahmevorrichtung ist vorgesehen, dass diese eine Seilzugspanneinheit umfasst, die angeordnet und ausgebildet ist, eine Seilspannung des ersten Seilzugs und/oder des zweiten Seilzugs einzustellen. Insbesondere, wenn der erste Seilzug und der zweite Seilzug einteilig ausgebildet sind, ist es bevorzugt, die Seilspannung mittels der Seilzugspanneinheit einzustellen.

Es ist bevorzugt, dass die Seilzugspanneinheit einen den ersten Seilzug und/oder den zweiten Seilzug auslenkenden Spannhebel aufweist. Der Spannhebel kann beispielsweise um eine Welle oder eine Achse rotatorisch bewegbar angeordnet sein und mit seinen Hebelenden in den ersten Seilzug und/oder den zweiten Seilzug eingreifen. Durch das Auslenken des Seilzugs wird die Seilspannung eingestellt. Es ist darüber hinaus bevorzugt, dass der erste Seilzug an einer ersten Spannrolle und an einer zweiten Spannrolle geführt ist. Die erste Spannrolle und/oder die zweite Spannrolle können rotatorisch an dem Spannhebel gelagert sein.

Mit der Seilzugspanneinheit kann der aus dem ersten Seilzug und dem zweiten Seilzug einteilig bestehende oder diese umfassende Seilzug in vorteilhafter Weise verwendet werden. Insbesondere sind keine zwei unabhängigen Antriebe für den ersten Seilzug und den zweiten Seilzug erforderlich und dennoch ist eine individuelle Einstellung der Seilspannung möglich.

Eine weitere bevorzugte Ausführungsvariante der Lastaufnahmevorrichtung zeichnet sich dadurch aus, dass die Oberschiene als eine Kippschiene ausgebildet ist, die um eine parallel zu der Hauptbewegungsrichtung ausgerichtete Kippachse kippbar angeordnet ist, sodass die Auflagerfläche der Kippschiene anhebbar ist.

Es ist insbesondere bevorzugt, dass die Kippschiene mit einem Kippschienenantrieb gekoppelt ist, der angeordnet und ausgebildet ist, die Auflagerfläche der Kippschiene anzuheben. Dies kann beispielsweise über einen Hebelmechanismus und Seilzüge erfolgen, die an dem Hebelmechanismus wirken. Insbesondere können die Seilzüge an einem Ende der Kippschiene angeordnet sein, das der Auflagefläche abgewandt ist.

Eine weitere bevorzugte Ausführungsvariante der Lastaufnahmevorrichtung zeichnet sich dadurch aus, dass die erste Bewegungseinheit als ein relativ zu dem Grundrahmen bewegbarer Schlitten ausgebildet ist oder diesen umfasst, wobei der Schlitten die Oberschiene, insbesondere die Kippschiene, die Unterschiene, die Antriebseinheit und/oder den Schienenantrieb aufweist.

Es ist darüber hinaus bevorzugt, dass die erste Bewegungseinheit eine erste Auflagereinheit und eine von der ersten Auflagereinheit in orthogonaler Richtung zur Hauptbewegungsrichtung beabstandete zweite Auflagereinheit aufweist, wobei die erste Auflagereinheit eine erste Oberschiene und eine erste Unterschiene und die zweite Auflagereinheit eine zweite Oberschiene und eine zweite Unterschiene aufweist.

Die erste Auflagereinheit ist im bestimmungsgemäßen Betrieb insbesondere in horizontaler, orthogonaler Richtung zur Hauptbewegungsrichtung von der zweiten Auflagereinheit beabstandet. Die Auflagereinheiten sind insbesondere derart beabstandet, dass diese seitlich an einer Lagereinheit angreifen können. Beispielsweise können die Auflagereinheiten beziehungsweise die Schienen derart voneinander beabstandet sein, dass diese in die üblicherweise an 600 x 400er Behältern vorgesehenen Aussparungen am Boden angreifen können.

Die erste Auflagereinheit und die zweite Auflagereinheit werden vorzugsweise von dem Schlitten umfasst. Die erste Oberschiene, die erste Unterschiene, die zweite Oberschiene und die zweite Unterschiene können jeweils die im Vorherigen genannten Merkmale der Oberschiene und Unterschiene aufweisen.

Eine weitere bevorzugte Ausführungsvariante der Lastaufnahmevorrichtung zeichnet sich dadurch aus, dass die zweite Bewegungseinheit mindestens einen Reibriemenantrieb aufweist, der angeordnet und ausgebildet ist, um die Lagereinheit mittels Reibschluss zwischen der Übergabeposition und der Transportposition zu bewegen. Es ist ferner bevorzugt, dass die Lastaufnahmevorrichtung einen ersten Reibriemenantrieb und einen zweiten Reibriemenantrieb aufweist, die derart angeordnet und ausgebildet sind, dass zwischen diesen die Lagereinheit anordenbar ist, sodass eine Reibkraft auf beide Seiten der Lagereinheit ausübbar ist. Die Reibriemenantriebe können jeweils einen Reibriemen, Umlenkrollen und/oder einen Antrieb aufweisen.

Gemäß einem weiteren Aspekt wird die eingangs genannte Aufgabe gelöst durch eine Regalbedieneinheit zum Bedienen eines Lagerregals, umfassend einen Antrieb zum Bewegen entlang des Lagerregals und eine Lastaufnahmevorrichtung nach einer der im Vorherigen beschriebenen Ausführungsvarianten.

Gemäß einem weiteren Aspekt wird die eingangs genannte Aufgabe gelöst durch ein Regalsystem, umfassend eine Vielzahl an Lagerregalen und eine Regalbedieneinheit nach dem vorherigen Aspekt und/oder eine Lastaufnahmevorrichtung nach einer der im Vorherigen beschriebenen Ausführungsvarianten.

Gemäß einem weiteren Aspekt wird die eingangs genannte Aufgabe gelöst durch ein Verfahren zur Übergabe einer Lagereinheit von einem Lagerregal, in dem die Lagereinheit in einer Lagerposition gelagert wird, zu einer Regalbedieneinheit, mit der die Lagereinheit in einer Transportposition transportiert wird, umfassend die Schritte: Bewegen der Lagereinheit aus der Lagerposition in eine Übergabeposition und zumindest abschnittsweises und zeitparalleles Anheben der Lagereinheit und Bewegen der Lagereinheit von der Übergabeposition in die Transportposition.

Die im Vorherigen genannten Komponenten und Verfahrensschritte können die im Vorherigen genannten Merkmale der Lastaufnahmevorrichtung mit den erforderlichen Änderungen aufweisen.

Das Bewegen der Lagereinheit aus der Lagerposition in die Übergabeposition umfasst vorzugsweise ein vorheriges Anordnen einer Oberschiene und/oder einer Unterschiene unter die Lagereinheit und Ziehen der Lagereinheit in die Übergabeposition. Das Anheben der Lagereinheit kann ein Kippen einer Kippschiene, insbesondere durch eine Ansteuerung eines Kippschienenantriebs, umfassen.

Darüber hinaus kann das Anheben der Lagereinheit ein Bewegen einer Oberschiene relativ zu der Unterschiene umfassen, die korrespondierende Geometrien aufweisen, sodass die Oberschiene angehoben wird. Das Bewegen der Lagereinheit von der Übergabeposition in die Transportposition kann insbesondere mittels Reibschluss erfolgen, beispielsweise durch zwei Reibriemen, zwischen denen die Lagereinheit anordenbar ist. Während des Bewegens der Lagereinheit von der Übergabeposition in die Transportposition, ist diese vorzugsweise nicht angehoben.

Gemäß einem weiteren Aspekt wird die eingangs genannte Aufgabe gelöst durch ein Verfahren zur Übergabe einer Lagereinheit von einer Regalbedieneinheit, mit der die Lagereinheit in einer Transportposition transportiert wird, zu einem Lagerregal, indem die Lagereinheit in einer Lagerposition gelagert wird, umfassend die Schritte: Bewegen der Lagereinheit von der Transportposition in eine Übergabeposition und Bewegen der Lagereinheit von der Übergabeposition in die Lagerposition und zumindest abschnittsweise und zeitparalleles Anheben der Lagereinheit. Die im Vorherigen genannten Merkmale des Verfahrens zur Übergabe einer Lagereinheit von einem Lagerregal zu einer Regalbedieneinheit, gelten für dieses Verfahren mit den erforderlichen Änderungen analog.

Die Verfahren und ihre möglichen Fortbildungen weisen Merkmale beziehungsweise Verfahrensschritte auf, die sie insbesondere dafür geeignet machen, für die Lastaufnahmevorrichtung, die Regalbedieneinheit und/oder das Regalsystem und die entsprechenden Fortbildungen verwendet zu werden.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der Lastaufnahmevorrichtung verwiesen.

Bevorzugte Ausführungsbeispiele werden exemplarisch anhand der beiliegenden Figuren erläutert. Es zeigen:
- Figur 1:: eine schematische, dreidimensionale Ansicht einer Lastaufnahmevorrichtung mit einer Lagereinheit in einer Transportposition;
- Figur 2:: die in Figur 1 gezeigte Lastaufnahmevorrichtung mit einer Lagereinheit in einer Übergabeposition;
- Figur 3:: die in Figur 1 gezeigte Lastaufnahmevorrichtung mit einer Lagereinheit in einer Lagerposition;
- Figur 4:: eine schematische, zweidimensionale Ansicht einer weiteren beispielhaften Ausführungsform einer Lastaufnahmevorrichtung;
- Figur 5:: eine schematische, zweidimensionale Ansicht der in Figur 4 gezeigten Lastaufnahmevorrichtung mit einer angehobenen Lagereinheit;
- Figur 6:: eine schematische, zweidimensionale Ansicht der in Figur 4 gezeigten Lastaufnahmevorrichtung mit einer Lagereinheit in einer Lagerposition;
- Figur 7:: eine schematische, dreidimensionale Ansicht einer weiteren beispielhaften Ausführungsform einer Lastaufnahmevorrichtung;
- Figur 8:: eine schematische, zweidimensionale Ansicht der in Figur 7 gezeigten Lastaufnahmevorrichtung;
- Figur 9:: zwei schematische Schnittzeichnungen der in Figur 7 gezeigten Lastaufnahmevorrichtung mit in einer Ruheposition befindlichen Oberschiene;
- Figur 10:: zwei schematische Schnittzeichnungen der in Figur 7 gezeigten Lastaufnahmevorrichtung mit in einer Hebeposition befindlichen Oberschiene;
- Figur 11:: eine schematische, zweidimensionale Ansicht einer weiteren beispielhaften Ausführungsform einer Lastaufnahmevorrichtung;
- Figur 12:: eine schematische, dreidimensionale Ansicht der in Figur 11 gezeigten Lastaufnahmevorrichtung;
- Figur 13:: eine schematische Ansicht einer beispielhaften Ausführungsform eines Regalsystems;
- Figur 14:: eine schematische Ansicht eines beispielhaften Verfahrens; und
- Figur 15:: eine schematische Ansicht eines weiteren beispielhaften Verfahrens.

In den Figuren sind gleiche oder im Wesentlichen funktionsgleiche beziehungsweise -ähnliche Elemente mit den gleichen Bezugszeichen bezeichnet. Die technischen Merkmale der im Folgenden beschriebenen Ausführungsformen können miteinander kombiniert werden, sodass weitere Ausführungsformen entstehen.

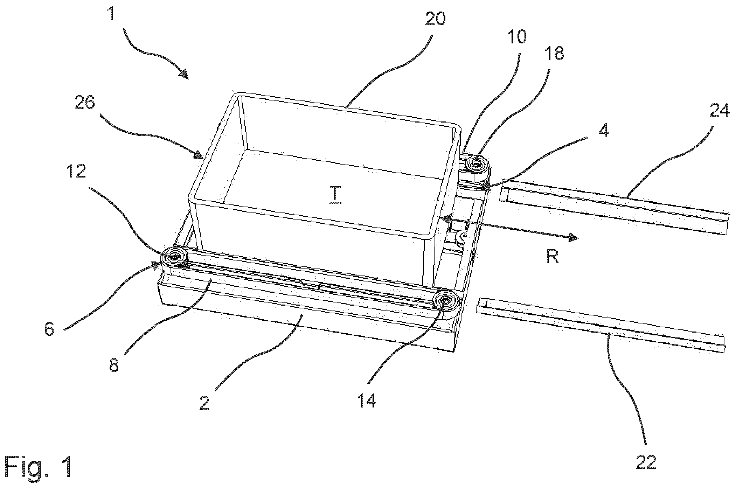

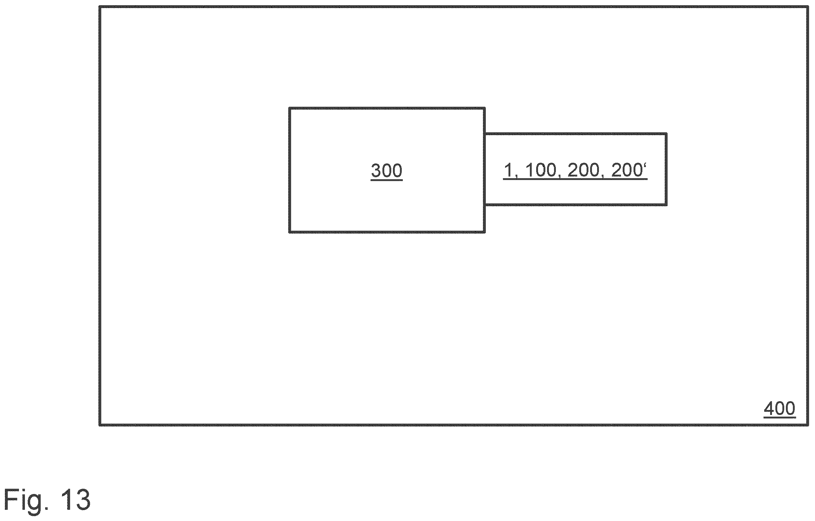

Die Figuren 1 - 3 zeigen das Grundprinzip der Lastaufnahmevorrichtung 1. Die Lastaufnahmevorrichtung 1 ist zur Übergabe der Lagereinheit 20 zwischen einer in Figur 13 gezeigten Regalbedieneinheit 300, mit der die Lagereinheit 20 in der Transportposition T transportierbar ist, und einem Lagerregal, indem die Lagereinheit 20 in einer Lagerposition L lagerbar ist, ausgebildet.

Hierfür umfasst die Lastaufnahmevorrichtung 1 eine erste Bewegungseinheit 4, mit der die Lagereinheit 20 aus der Übergabeposition U in die Lagerposition L und aus der Lagerposition L in die Übergabeposition U bewegt werden kann. Ferner umfasst die Lastaufnahmevorrichtung 1 eine zweite Bewegungseinheit 6 zur Bewegung der Lagereinheit 20 von der Übergabeposition U in die Transportposition T und von der Transportposition T in die Übergabeposition U.

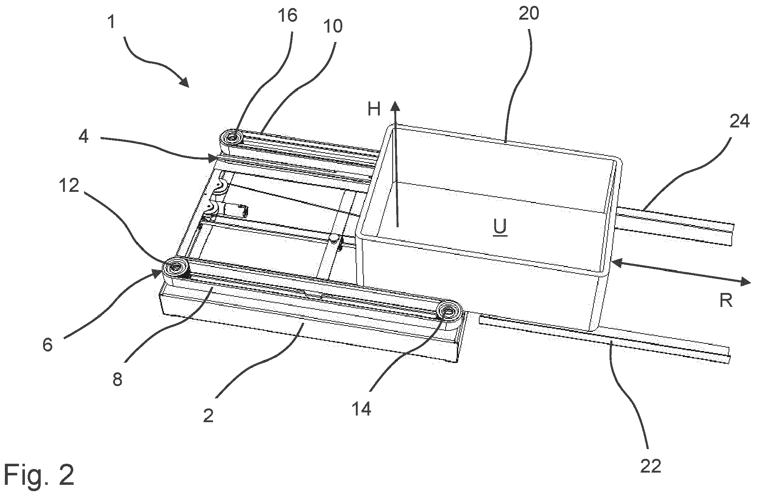

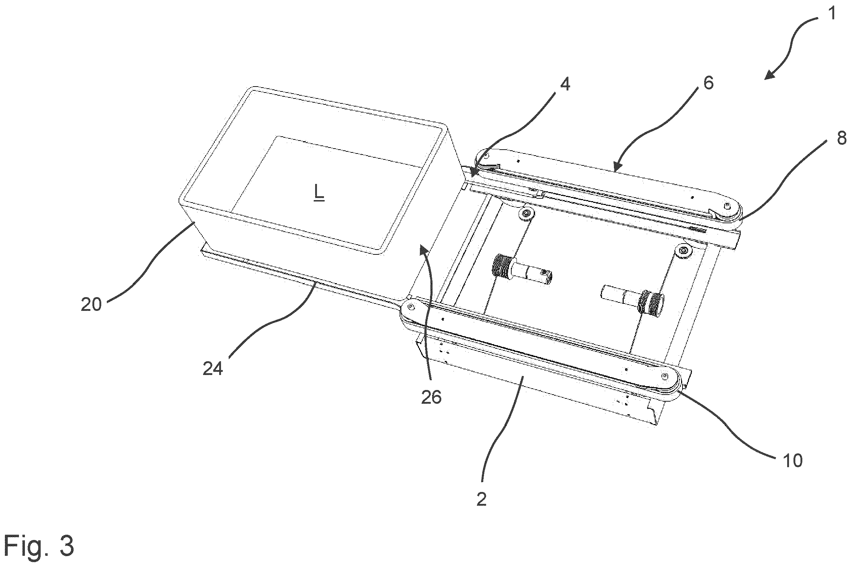

Die erste Bewegungseinheit 4 ist weiter angeordnet und ausgebildet, um die Lagereinheit 20 an einer Anhebeseite 26 in Anheberichtung H anzuheben. Das Anheben der Lagereinheit 20 erfolgt insbesondere in der in Figur 2 gezeigten Übergabeposition U und/oder der in Figur 3 gezeigten Lagerposition L, sodass die Lagereinheit 20 auf den Winkelauflagen 22, 24 des Regals lediglich mit der der Lastaufnahmevorrichtung abgewandten Seite mit einer Bodenkante gezogen bzw. geschoben wird.

Die Richtung, mit der die Lagereinheit 20 von der Transportposition T in die Übergabeposition U und schließlich in die Lagerposition L sowie auch in umgekehrter Richtung bewegt wird, wird als Hauptbewegungsrichtung R bezeichnet.

Die Lastaufnahmevorrichtung umfasst ferner einen Grundrahmen 2, an dem die erste Bewegungseinheit 4 und die zweite Bewegungseinheit 6 angeordnet sind. Die zweite Bewegungseinheit 6 umfasst einen ersten Reibriemen 8 und einen zweiten Reibriemen 10, zwischen denen die Lagereinheit 20 anordenbar ist, wobei zwischen der Lagereinheit 20 und den Reibriemen 8, 10 ein Reibschluss ausbildbar ist. Die Reibriemen sind mit Umlenkrollen 12 - 18 geführt.

Im bestimmungsgemäßen Betrieb wird die Lagereinheit 20 von der in Figur 1 gezeigten Transportposition T mittels der Reibriemen 8, 10 in die in Figur 2 gezeigte Übergabeposition U bewegt. Anschließend wird die Lagereinheit 20 mittels der ersten Bewegungseinheit 4 in Anheberichtung H angehoben. Danach wird die Lagereinheit 20 in der angehobenen Position in der Hauptbewegungsrichtung R von der Übergabeposition U in die in Figur 3 gezeigte Lagerposition L bewegt. Dies erfolgt insbesondere dadurch, dass die erste Bewegungseinheit 4 in Richtung der Winkelauflager 22, 24 ausgefahren wird. Hierfür sind verschiedene Mechanismen möglich, die in den folgenden Figuren gezeigt sind.

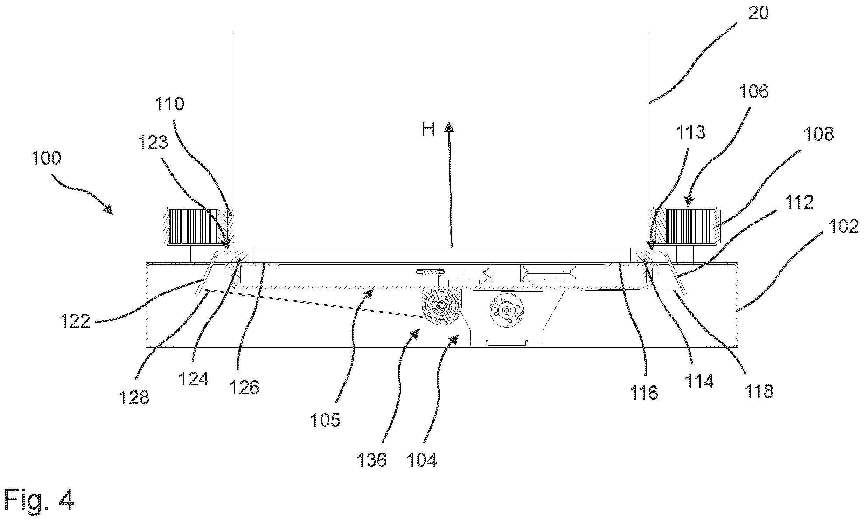

Die in den Figuren 4 - 6 gezeigte Lastaufnahmevorrichtung 100 umfasst ebenfalls einen Grundrahmen 102, eine erste Bewegungseinheit 104 und eine zweite Bewegungseinheit 106. Die zweite Bewegungseinheit 106 umfasst einen ersten Reibriemen 108 und einen zweiten Reibriemen 110.

Die erste Bewegungseinheit 104 weist einen Schlitten 105 auf. Ferner weist die erste Bewegungseinheit 104 eine erste Kippschiene 112 mit einer ersten Auflagerfläche 113 und eine zweite Kippschiene 122 mit einer zweiten Auflagerfläche 123 auf. Die Kippschienen 112, 122 sind um eine parallel zu der Hauptbewegungsrichtung R ausgerichtete Kippachse kippbar angeordnet, sodass die Auflagerflächen 113, 123 anhebbar sind.

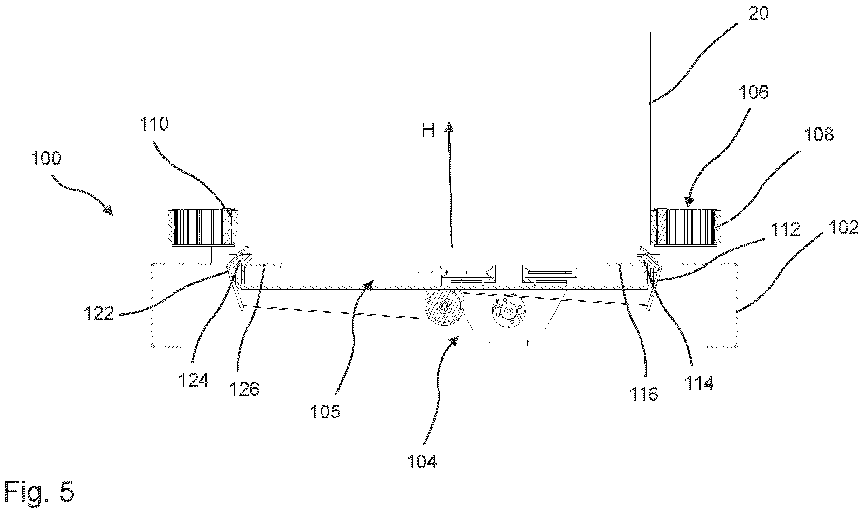

Der angehobene Zustand der Auflagerflächen 113, 123 ist in der Figur 5 gezeigt, wodurch die Lagereinheit 20 angehoben ist. Die Kippschienen 112, 122 sind auf dem Schlitten 105 angeordnet, der in Hauptbewegungsrichtung R hin- und herbewegbar ist. In der in Figur 4 gezeigten Ruheposition der Kippschienen 112, 122 liegen diese auf der ersten Auflagerschiene 114 und auf der zweiten Auflagerschiene 124 auf. Die Auflagerschienen 114, 124 weisen eine gleitfähige Unterseite auf, sodass diese auf dem ersten Auflagerabschnitt 116 und dem zweiten Auflagerabschnitt 126, die nicht mit dem Schlitten 105 mitbewegbar sind, gleiten können. Die Auflagerschienen 114, 124 können beispielsweise aus Nylon oder Polycaprolactam bestehen oder eines oder beide dieser Materialien umfassen. Die Auflagerabschnitte 116, 126 können beispielsweise mit dem Grundrahmen 102 verbunden sein. Die Kippschienen 112, 122 und die Auflagerschienen 114, 124 erstrecken sich von einem ersten Ende 130 zu einem zweiten Ende 132 und sind schlank ausgebildet.

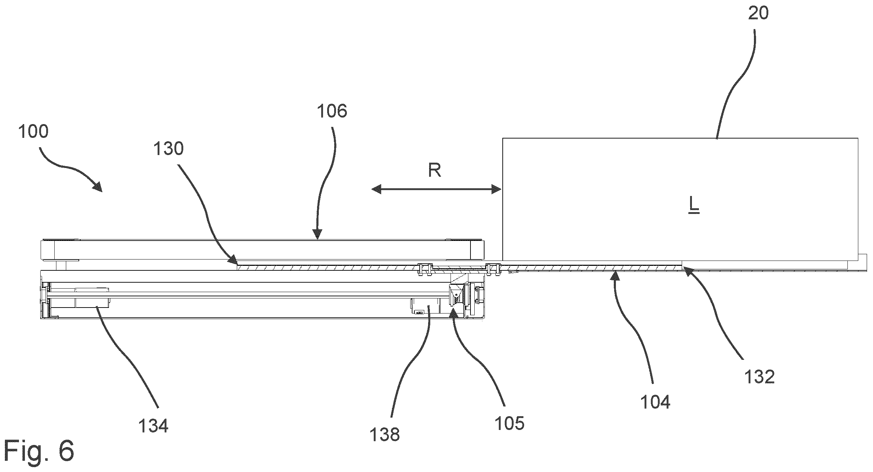

Die den Auflagerflächen 113, 123 abgewandten Enden der Kippschienen 112, 122 sind jeweils mit einem Seilzug 118, 128 verbunden. Die Seilzüge 118, 128 sind zu einer Seilzugwinde 136 geführt. Die Seilzugwinde 136 ist mit einem in Figur 6 gezeigten Seilzugwindenantrieb 138 gekoppelt. Die Bewegung des Schlittens 105 wird mittels eines Schlittenantriebs 134 und einer Seilzugkonstruktion realisiert.

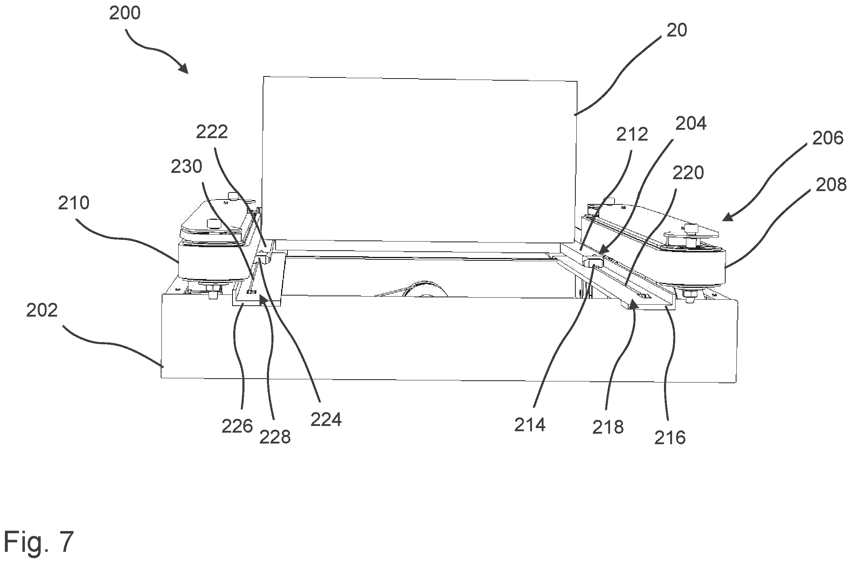

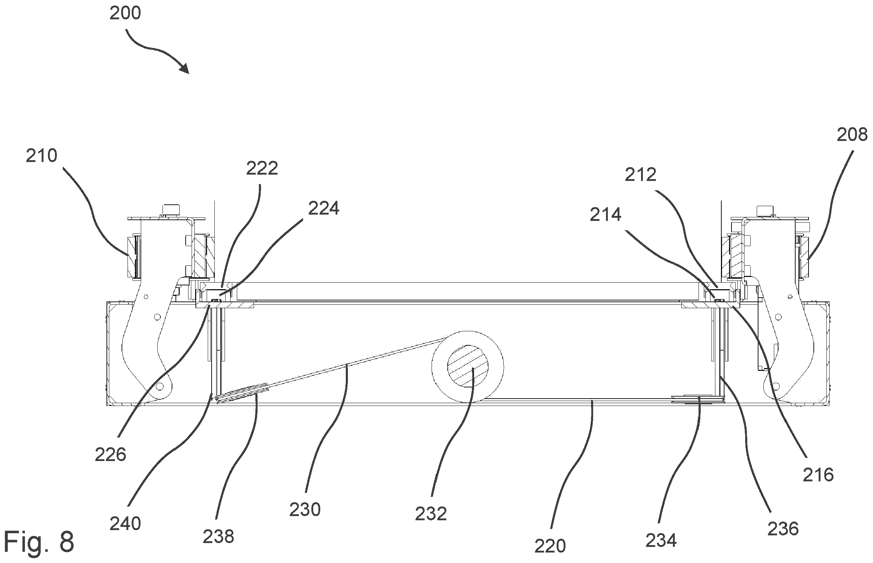

In den Figuren 7 - 10 ist eine Lastaufnahmevorrichtung 200 mit einem Grundrahmen 202, einer ersten Bewegungseinheit 204, einer zweiten Bewegungseinheit 206, die einen ersten Reibriemen 208 und einen zweiten Reibriemen 210 umfasst, gezeigt.

Die erste Bewegungseinheit 204 weist hier einen von der im Vorherigen beschriebenen ersten Bewegungseinheit 104 abweichenden Hebemechanismus auf. Die erste Bewegungseinheit 204 weist eine erste Oberschiene 212 und eine korrespondierende erste Unterschiene 214 sowie eine zweite Oberschiene 222 und eine korrespondierende zweite Unterschiene 224 auf.

Insbesondere in Figur 7 ist gezeigt, dass die Oberschienen 212, 222 in vertikaler Richtung über den entsprechenden Unterschienen 214, 224 angeordnet sind. Die Oberschienen 212, 222 sind zusammen mit den Unterschienen 214, 224 in der Hauptbewegungsrichtung R bewegbar angeordnet. Hierfür gleiten die Unterschienen 214, 224 auf den Gleitflächen 218, 228 der ersten Gleitschiene 216 und der zweiten Gleitschiene 226.

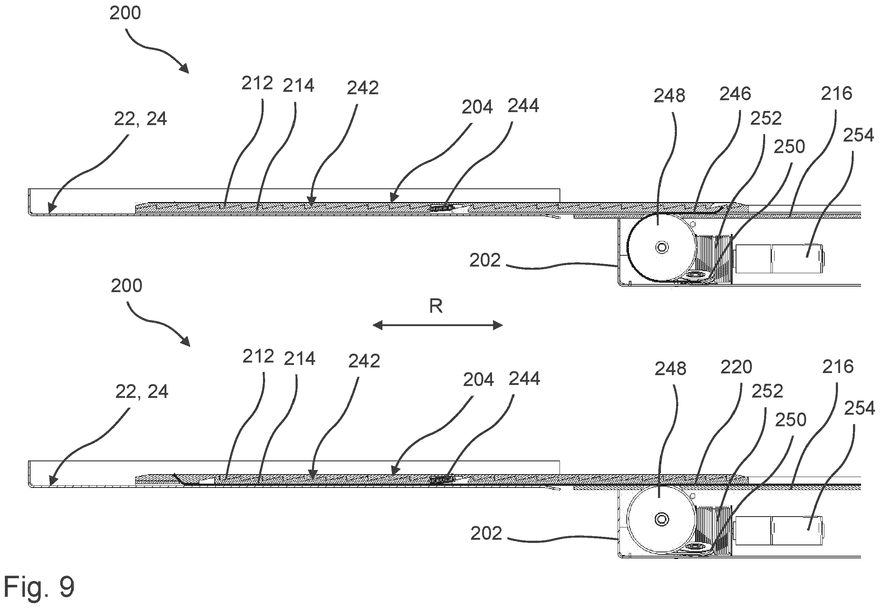

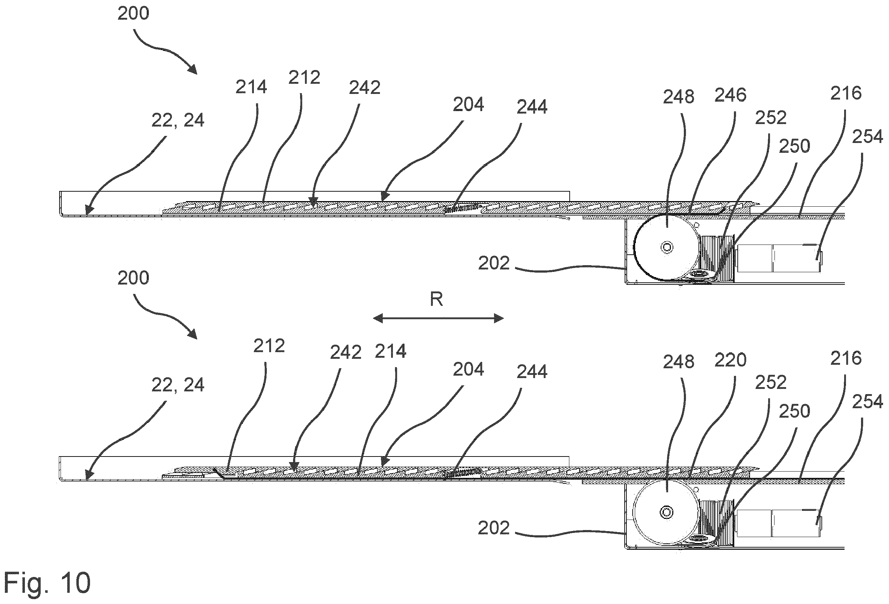

Die Bewegung der Unterschienen 214, 224 mit den Oberschienen 212, 222 erfolgt über einen in Figur 9 und 10 gezeigten ersten Seilzug 246. Mittels des ersten Seilzugs 246 werden die Oberschienen 212, 222 und die Unterschienen 214, 224 in Hauptbewegungsrichtung R hin- und herbewegt.

Die Oberschienen 212, 222 sind darüber hinaus jeweils mit einem zweiten Seilzug 220, 230 verbunden. Mit den zweiten Seilzügen 220, 230 werden die Unterschienen 214, 224 und die Oberschienen 212, 222 jeweils auseinandergezogen. Dieses Auseinanderziehen erfolgt gegen ein Federelement 244. Die in Figur 9 dargestellte Ruheposition zeigt ein unmittelbares Aufeinanderliegen der Oberschiene 212 und der Unterschiene 214. In diesem Zustand ist das Federelement 244 zusammengezogen.

In Figur 10 ist die Oberschiene 212 in einer Hebeposition gezeigt, indem die Oberschiene 212 und die Unterschiene 214 auseinandergezogen sind. Das Auseinanderziehen erfolgt mit dem zweiten Seilzug 220. In diesem Zustand wird die Oberschiene 212 und entsprechend auch eine auf der Oberschiene 212 angeordnete Lagereinheit 20 angehoben und ist in diesem Zustand in vorteilhafter Weise in ein Lagerregal bringbar oder aus diesem herausnehmbar.

In den Figuren 9 und 10 ist weiter gezeigt, dass der erste Seilzug 246 über zwei Umlenkrollen 248, 250 mit einer ersten angetriebenen Seilzugwinde 252 gekoppelt ist, mit der der Seilzug ab- und eingerollt werden kann. Die erste angetriebene Seilzugwinde 252 ist mit einem Antrieb 254 gekoppelt. Auch der zweite Seilzug ist mit einer angetriebenen Seilzugwinde 232 gekoppelt, wobei die Umlenkrollen 234 - 240 zur Anwendung kommen.

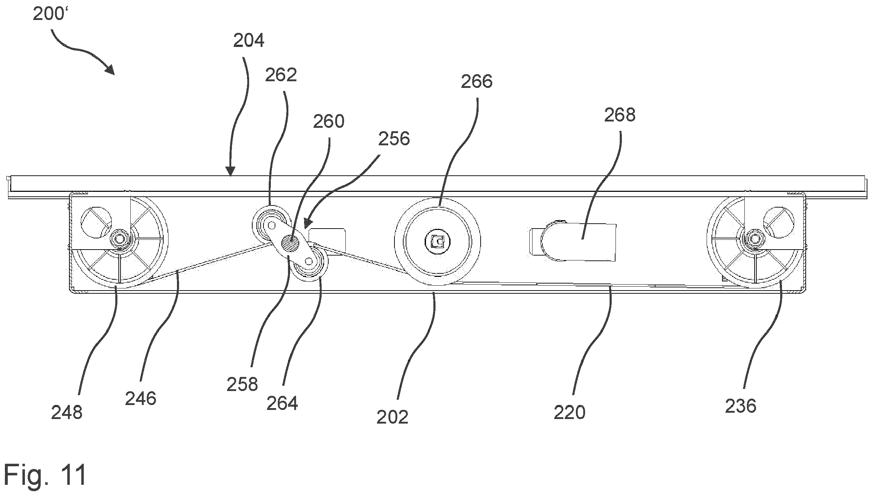

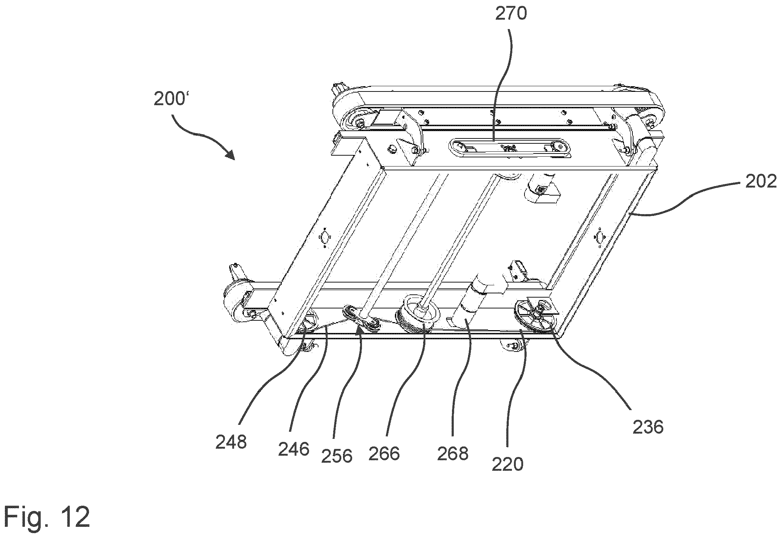

Die in den Figuren 9 und 10 gezeigten Oberschienen 212, 222 und die Unterschienen 214, 224 weisen jeweils eine korrespondierende Verzahnung 242 auf, sodass die Oberschiene 212 durch die Relativbewegung zu der Unterschiene 214 in die Anhebeposition angehoben wird. In den Figuren 11 und 12 ist eine abgewandelte Form der Lastaufnahmevorrichtung 200' gezeigt. Das Grundprinzip mit den Oberschienen und Unterschienen und einer entsprechenden Verzahnung zum Anheben der Oberschienen ist gleich. Anderweitig ausgebildet ist jedoch der Antrieb des ersten Seilzugs 246 und des zweiten Seilzugs 220.

Die Seilzüge 220, 246 sind einteilig ausgebildet. Vorliegend ist der erste Seilzug um die Umlenkrolle 248 geführt. Von dort aus ist der erste Seilzug 246 zu einer Seilzugspanneinheit 256 geführt, die angeordnet und ausgebildet ist, den ersten Seilzug 246 auszulenken. Hierfür weist die Seilzugspanneinheit 256 einen Spannhebel 258 auf, der an einer Hebelwelle 260 rotatorisch angeordnet ist. Die Hebelwelle 260 ist, wie in der Figur 12 gezeigt, mittels eines Zahnriemens 270 mit einem Spannhebelantrieb 268 gekoppelt.

An der Hebelwelle 260 ist eine erste Spannrolle 262 und eine zweite Spannrolle 264 angeordnet. Der erste Seilzug 246 ist mittels der Spannrollen 262, 264 geführt. Von der Seilzugspanneinheit 256 ist der erste Seilzug 246 zu der Seilzugwinde 266 geführt, zu der auch der zweite Seilzug 220 mittels der Umlenkrolle 236 geführt ist.

In Figur 13 ist schematisch ein Regalsystem 400 gezeigt, das eine Vielzahl an Lagerregalen und eine Regalbedieneinheit 300 aufweist, wobei die Regalbedieneinheit 300 eine Lastaufnahmevorrichtung 1, 100, 200, 200' umfasst.

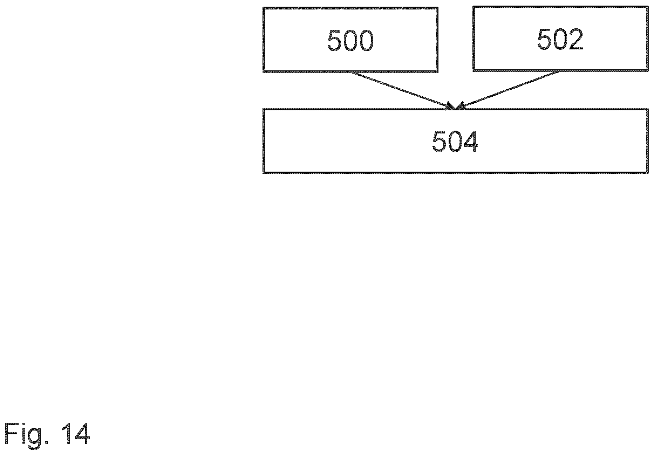

Figur 14 zeigt schematisch ein Verfahren zur Übergabe einer Lagereinheit 20 von einem Lagerregal, indem die Lagereinheit 20 in einer Lagerposition L gelagert wird, zu einer Regalbedieneinheit 300, mit der die Lagereinheit 20 in einer Transportposition T transportiert wird. In Schritt 500 wird die Lagereinheit 20 aus der Lagerposition L in eine Übergabeposition U bewegt. Zumindest abschnittsweise entlang der Strecke zwischen der Lagerposition L und der Übergabeposition U und zeitparallel wird die Lagereinheit 20 in Schritt 502 angehoben. In Schritt 504 wird die Lagereinheit 20 bei der Übergabeposition U in die Transportposition T bewegt.

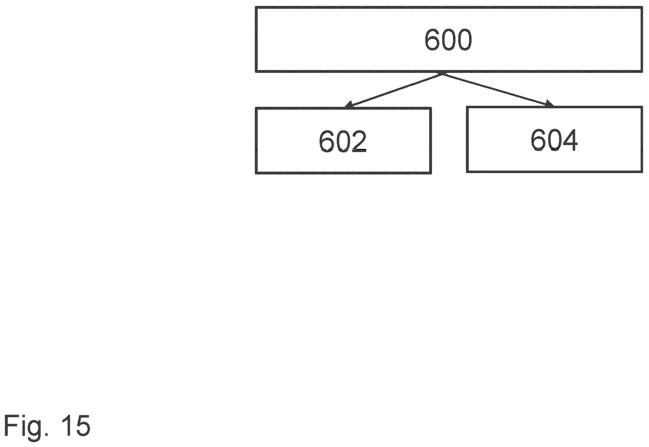

Figur 15 zeigt schematisch ein Verfahren zur Übergabe einer Lagereinheit 20 von einer Regalbedieneinheit 300, mit der die Lagereinheit 20 in einer Transportposition T transportiert wird, zu einem Lagerregal, indem die Lagereinheit 20 in einer Lagerposition L gelagert wird. In Schritt 600 wird die Lagereinheit 20 von einer Transportposition T in eine Übergabeposition U bewegt. In Schritt 602 wird die Lagereinheit von der Übergabeposition U in die Lagerposition L bewegt. Zumindest abschnittsweise entlang der Strecke zwischen der Lagerposition L und der Übergabeposition U und zeitparallel wird die Lagereinheit 20 in Schritt 604 angehoben.

Die im Vorherigen beschriebene Lastaufnahmevorrichtung 1, 100, 200, 200' hat den Vorteil, dass diese in dem Regalsystem 400 im Wesentlichen keinen eigenen Platzbedarf erfordert, sodass der für die Lastaufnahmevorrichtung 1, 100, 200, 200' vorzusehende Freiraum reduziert ist. Durch die schlank ausgeführten Oberund Unterschienen 212, 222, 214, 224 können diese an ohnehin vorhandenen Aussparungen an den Lagereinheiten 20 angreifen. Somit wird der Volumen-Nutzungsgrad des Regalsystems 400 gesteigert.

Darüber hinaus ist es nicht erforderlich, dass die erste Bewegungseinheit 4, 104, 204 vollständig in ein Lagerfach des Regalsystems 400 einfährt, sondern lediglich beispielsweise zur Hälfte. Somit wird die Spielzeit einer Übergabe einer Lagereinheit 20 reduziert und die Effizienz des gesamten Regalsystems 400 wird gesteigert.

### BEZUGSZEICHEN

- 1: Lastaufnahmevorrichtung
- 2: Grundrahmen
- 4: erste Bewegungseinheit
- 6: zweite Bewegungseinheit
- 8: erster Reibriemen
- 10: zweiter Reibriemen
- 12: Umlenkrolle
- 14: Umlenkrolle
- 16: Umlenkrolle
- 18: Umlenkrolle
- 20: Lagereinheit
- 22: Winkelauflager
- 24: Winkelauflager
- 26: Anhebeseite
- 100: Lastaufnahmevorrichtung
- 102: Grundrahmen
- 104: erste Bewegungseinheit
- 105: Schlitten
- 106: zweite Bewegungseinheit
- 108: erster Reibriemen
- 110: zweiter Reibriemen
- 112: erste Kippschiene
- 113: erste Auflagerfläche
- 114: erste Auflagerschiene
- 116: erster Auflagerabschnitt
- 118: erster Seilzug
- 122: zweite Kippschiene
- 123: zweite Auflagerfläche
- 124: zweite Auflagerschiene
- 126: zweiter Auflagerabschnitt
- 128: zweiter Seilzug
- 130: erstes Ende
- 132: zweites Ende
- 134: Schlittenantrieb
- 136: Seilzugwinde
- 138: Seilzugwindenantrieb
- 200, 200': Lastaufnahmevorrichtung
- 202: Grundrahmen
- 204: erste Bewegungseinheit
- 206: zweite Bewegungseinheit
- 208: erster Reibriemen
- 210: zweiter Reibriemen
- 212: erste Oberschiene
- 214: erste Unterschiene
- 216: erste Gleitschiene
- 218: erste Gleitfläche
- 220: zweiter Seilzug
- 222: zweite Oberschiene
- 224: zweite Unterschiene
- 226: zweite Gleitschiene
- 228: zweite Gleitfläche
- 230: zweiter Seilzug
- 232: zweite angetriebene Seilzugwinde
- 234: Umlenkrolle
- 236: Umlenkrolle
- 238: Umlenkrolle
- 240: Umlenkrolle
- 242: Verzahnung
- 244: Federelement
- 246: erster Seilzug
- 248: Umlenkrolle
- 250: Umlenkrolle
- 252: erste angetriebene Seilzugwinde
- 254: Antrieb
- 256: Seilzugspanneinheit
- 258: Spannhebel
- 260: Hebelwelle
- 262: erste Spannrolle
- 264: zweite Spannrolle
- 266: Seilzugwinde
- 268: Spannhebelantrieb
- 270: Zahnriemen
- 300: Regalbedieneinheit
- 400: Regalsystem
- T: Transportposition
- U: Übergabeposition
- L: Lagerposition
- R: Hauptbewegungsrichtung
- H: Anheberichtung

## Patentansprüche

1. Lastaufnahmevorrichtung (1, 100, 200, 200') zur Übergabe einer Lagereinheit zwischen einer Regalbedieneinheit (300), mit der die Lagereinheit in einer Transportposition (T) transportierbar ist, und einem Lagerregal, in dem die Lagereinheit in einer Lagerposition (L) lagerbar ist, umfassend
- eine erste Bewegungseinheit (4, 104, 204), die angeordnet und ausgebildet ist, um die Lagereinheit aus einer Übergabeposition (U) in die Lagerposition (L) und aus der Lagerposition (L) in die Übergabeposition (U) zu bewegen, und
- eine zweite Bewegungseinheit (6, 106, 206), die angeordnet und ausgebildet ist, um die Lagereinheit von der Übergabeposition (U) in die Transportposition (T) und von der Transportposition (T) in die Übergabeposition (U) zu bewegen,
- wobei die erste Bewegungseinheit (4, 104, 204) weiter angeordnet und ausgebildet ist, um die Lagereinheit an einer Anhebeseite (26) anzuheben.

2. Lastaufnahmevorrichtung (1, 100, 200, 200') nach Anspruch 1, wobei die erste Bewegungseinheit (4, 104, 204) einen Hebemechanismus zum Anheben der Lagereinheit aufweist, wobei der Hebemechanismus derart angeordnet und ausgebildet ist, dass die angehobene Lagereinheit lediglich mit einem Bodenabschnitt, vorzugsweise mit einer Bodenkante, innerhalb des Lagerregals bei einer ersten Übergabebewegung mit der ersten Bewegungseinheit (4, 104, 204) aufliegt.

3. Lastaufnahmevorrichtung (1, 100, 200, 200') nach einem der vorherigen Ansprüche, wobei
- der Hebemechanismus eine Oberschiene (112, 122, 212, 222) und eine vertikal unter der Oberschiene (112, 122, 212, 222) angeordnete Unterschiene (114, 124, 214, 224) aufweist,
- die Oberschiene (112, 122, 212, 222) und die Unterschiene (114, 124, 214, 224) parallel zu einer Hauptbewegungsrichtung (R) der Lagereinheit ausgerichtet sind, und
- die Oberschiene (112, 122, 212, 222) und die Unterschiene (114, 124, 214, 224) relativ zueinander derart bewegbar sind, dass eine Auflagerfläche (113, 123) der Oberschiene (112, 122, 212, 222) vertikal bewegbar ist, sodass die Anhebeseite (26) der Lagereinheit mit der Oberschiene (112, 122, 212, 222) anhebbar ist.

4. Lastaufnahmevorrichtung (1, 100, 200, 200') nach einem der vorherigen Ansprüche, wobei die Unterschiene (214, 224) auf einer der Oberschiene (212, 222) zugewandten Oberseite und die Oberschiene (212, 222) auf einer der Unterschiene (214, 224) zugewandten Unterseite jeweils eine korrespondierende Geometrie, insbesondere eine Verzahnung (242), aufweisen, die derart angeordnet und ausgebildet sind, dass die Oberschiene (212, 222) durch eine relative Bewegung zu der Unterschiene (214, 224) anhebbar ist.

5. Lastaufnahmevorrichtung (1, 100, 200, 200') nach einem der vorherigen Ansprüche, wobei die Oberschiene (212, 222) und die Unterschiene (214, 224) in einer Ruheposition von einem Federelement (244) zusammengezogen und in einer Hebeposition von einem Schienenantrieb auseinandergezogen sind, wobei die Oberschiene (212, 222) in der Hebeposition angehoben ist.

6. Lastaufnahmevorrichtung (1, 100, 200, 200') nach einem der vorherigen Ansprüche, wobei
- der Schienenantrieb einen mit der Unterschiene (214, 224) gekoppelten, ersten Seilzug (246) und einen mit der Oberschiene (212, 222) gekoppelten, zweiten Seilzug (220, 230) aufweist,
- der erste Seilzug (246) angeordnet und ausgebildet ist, um die Unterschiene (214, 224) und die Oberschiene (212, 222) zu bewegen, und
- der zweite Seilzug (220, 230) angeordnet und ausgebildet ist, um die Oberschiene (212, 222) relativ zu der Unterschiene (214, 224) zu bewegen.

7. Lastaufnahmevorrichtung (1, 100, 200, 200') nach einem der vorherigen Ansprüche, wobei der erste Seilzug (246) und der zweite Seilzug (220, 230) mittels einer einzelnen Antriebseinheit angetrieben werden.

8. Lastaufnahmevorrichtung (1, 100, 200, 200') nach einem der vorherigen Ansprüche, umfassend eine Seilzugspanneinheit (256), die angeordnet und ausgebildet ist, eine Seilspannung des ersten Seilzugs (246) und/oder des zweiten Seilzugs (220, 230) einzustellen.

9. Lastaufnahmevorrichtung (1, 100, 200, 200') nach einem der vorherigen Ansprüche, wobei
- die Seilzugspanneinheit (256) einen den ersten Seilzug (246) und/oder den zweiten Seilzug (220, 230) auslenkenden Spannhebel (258) aufweist, und
- vorzugsweise der erste Seilzug (246) an einer ersten Spannrolle (262) und an einer zweiten Spannrolle (264) geführt ist, und
- vorzugsweise die erste Spannrolle (262) und/oder die zweite Spannrolle (264) rotatorisch an dem Spannhebel (258) gelagert ist.

10. Lastaufnahmevorrichtung (1, 100, 200, 200') nach einem der vorherigen Ansprüche, wobei die Oberschiene (112, 122) als eine Kippschiene ausgebildet ist, die um eine parallel zu der Hauptbewegungsrichtung (R) ausgerichtete Kippachse kippbar angeordnet ist, sodass die Auflagerfläche der Kippschiene anhebbar ist.

11. Lastaufnahmevorrichtung (1, 100, 200, 200') nach einem der vorherigen Ansprüche, wobei die erste Bewegungseinheit (4, 104, 204) als ein relativ zu einem Grundrahmen (2, 102, 202) bewegbarer Schlitten (105) ausgebildet ist oder diesen umfasst, wobei der Schlitten die Oberschiene (112, 122, 212, 222), insbesondere die Kippschiene, die Unterschiene (114, 124, 214, 224), die Antriebseinheit und/oder den Schienenantrieb aufweist.

12. Lastaufnahmevorrichtung (1, 100, 200, 200') nach einem der vorherigen Ansprüche, wobei
- die erste Bewegungseinheit (4, 104, 204) eine erste Auflagereinheit und eine von der ersten Auflagereinheit in orthogonaler Richtung zur Hauptbewegungsrichtung (R) beabstandete zweite Auflagereinheit aufweist, und
- die erste Auflagereinheit eine erste Oberschiene (112, 122, 212, 222) und eine erste Unterschiene (114, 124, 214, 224) und die zweite Auflagereinheit eine zweite Oberschiene (112, 122, 212, 222) und eine zweite Unterschiene (114, 124, 214, 224) aufweist.

13. Lastaufnahmevorrichtung (1, 100, 200, 200') nach einem der vorherigen Ansprüche, wobei die zweite Bewegungseinheit (6, 106, 206) mindestens einen Reibriemenantrieb (108, 110, 208, 210) aufweist, der angeordnet und ausgebildet ist, um die Lagereinheit mittels Reibschluss zwischen der Übergabeposition (U) und der Transportposition (T) zu bewegen.

14. Regalbedieneinheit (300) zum Bedienen eines Lagerregals, umfassend einen Antrieb zum Bewegen entlang des Lagerregals und eine Lastaufnahmevorrichtung (1, 100, 200, 200') nach einem der vorherigen Ansprüche 1-13.

15. Regalsystem (400), umfassend eine Vielzahl an Lagerregalen und eine Regalbedieneinheit (300) nach dem vorherigen Anspruch 14 und/oder eine Lastaufnahmevorrichtung (1, 100, 200, 200') nach einem der vorherigen Ansprüche 1-13.

16. Verfahren zur Übergabe einer Lagereinheit von einem Lagerregal, in dem die Lagereinheit in einer Lagerposition (L) gelagert wird, zu einer Regalbedieneinheit (300), mit der die Lagereinheit in einer Transportposition (T) transportiert wird, umfassend die Schritte:
- Bewegen der Lagereinheit aus der Lagerposition (L) in eine Übergabeposition (U) und zumindest abschnittsweise und zeitparalleles Anheben der Lagereinheit, und
- Bewegen der Lagereinheit von der Übergabeposition (U) in die Transportposition (T).

17. Verfahren zur Übergabe einer Lagereinheit von einer Regalbedieneinheit (300), mit der die Lagereinheit in einer Transportposition (T) transportiert wird, zu einem Lagerregal, in dem die Lagereinheit in einer Lagerposition (L) gelagert wird, umfassend die Schritte:
- Bewegen der Lagereinheit von der Transportposition (T) in eine Übergabeposition (U), und
- Bewegen der Lagereinheit von der Übergabeposition (U) in die Lagerposition (L) und zumindest abschnittsweise und zeitparalleles Anheben der Lagereinheit.
